# EUROPEAN PATENT APPLICATION

(11) **EP 1 681 889 A1**
(43) Date of publication of application: **19.07.2006**
(21) Application number: 05290089.1
(22) Date of filing: 13.01.2005
(51) Int. Cl.: H04Q 7/38

(54) **Method and system for mobility management in communication networks**

(71) Applicant: FRANCE TELECOM, 75015 Paris (FR)
(72) Inventor: Fuccellaro, Jean-Louis, Ealing London W13 0LZ (GB); Vigue, Hélène, London W4 5DW (GB)

(57) **Abstract**

For providing neighbouring information relative to cells belonging to heterogeneous networks, a method comprises:
- a first context information request step (102,116) triggered by a reception of a report message from a mobile node, said report message identifying a current cell connected to the mobile node, wherein context information identifies a previous cell registered to be connected to the mobile node before reception of said report message;
- a table update step (118) performed when the current cell is different from the previous cell wherein an identifier of said previous cell and an identifier of said current cell are stored in a table (18) for indicating that said cells are neighbour cells.

## Description

The present invention relates to a method and system for mobility management in communication networks and more particularly in heterogeneous networks. Usually, when a mobile node is affiliated to a wireless network like a radio cellular network, the mobile node can execute handovers inside the access network of the radio cellular network with purpose of maintaining an acceptable quality of an established communication. Many wireless networks of different technologies can coexist near one another and it can be interesting to seize the opportunity of a more appropriate network for providing of a communication.

The patent application EP1435748 discloses a system for adaptation application following a handover between wireless networks of different capabilities. When a mobile terminal changes its affiliation from one access network to another, information representing this change is made available by a mobility manager to an application server. Receiving this information, the application server negotiates a change of service with the mobile terminal in accordance with the change of affiliation.

The patent application WO03/047296 discloses a mobility manager designed to determine with which access point a mobile transceiver should set up a communication and which access point is more appropriate for a change when necessary. A list of nearby access points is provided by the mobility manager to the mobile transceiver so as to measure a quality of transmission with the access points of the list when the quality of transmission with a current access point falls under a threshold. The list of nearby access points can be established according to environmental information relative to the mobile node at which the list is aimed.

The patent application EP0933954 discloses a method of investigating and a method of altering a topology of a cellular communication system. For each base station BS is allocated a neighbour list of BSs that will serve as candidate handover BSs. The candidate BSs are chosen from those located in close geographical proximity to the cell area of the BS. The neighbour list of the BS is updated according to a mobile node reporting which received signal of other BSs is of the greatest strength. This method needs a good knowledge of the topology of the system and needs further to collect metric data. It is specifically appropriate for a specific network.

The patent application EP 1427234 discloses a method of generating cell neighbour lists in a cellular telecommunication system. A centralized knowledge of the neighbour lists is obtained from calculations. Problems are at least the one of the calculations to be specific to the network and the one of maintaining the lists up-to-date.

The patent application CA2210723 rely on an access to operator managed pieces of information for discovering a topology of the access network that is particularly a GSM system.

The patent application SE522849 discloses a method and system for broadcasting messages including located targeted advertisement in a cellular network. It is based on an a priori knowledge of a geographical position of the cells of the particularly cellular network wherein it is implemented.

A drawback of the prior art is that any disclosed method or system for discovering locations of cells is addressed to a specific network and is often dependent of the particular technology of the specific network. Another drawback is that information on the repartition of locations of cells is hosted in the particular network to which it is addressed and is consequently not easily exploitable for other network. Furthermore disclosed methods and system are generally based on calculation or measurements for determining neighbourhood of cells that generate difficulties to maintain information up-to-date.

Therefore in an environment where many heterogeneous networks coexist, a need appears for determining locations of cells that are independent of the different technologies of the networks. A need appears also of centralised information for locating cells of a network in regard with another network. Another need appears that is to provide a method and system that offers easy updating of neighbourhood of cells, more particularly in regard with other networks than the one to which a cell pertains.

A first object of the invention is a method for providing neighbouring information relative to cells belonging to heterogeneous networks. The method comprises a first context information request step triggered by a reception of a report message from a mobile node. Said report message identifies a current cell connected to the mobile node and context information identifies a previous cell registered to be connected to the mobile node before reception of said report message. In a table update step performed when the current cell is different from the previous cell, an identifier of said previous cell and an identifier of said current cell are memorised in a table for indicating that said cells are neighbour cells.

The information provided by the table is technology independent of the networks because no consideration on the networks is taken into account for memorising identifiers of previous and current cells. The table is updated by detection of simply a mobile node informing of a change of cell. Many cells can be memorised as neighbour cells when many mobiles change from a previous cell to a current cell, independently of the cells belonging to a same or a different network. No calculation or measurement is needed as it is the case in the state of the art.

The detection of a cell change can be processed at each reception of a report message for example at an early stage of creation of the table or only for some randomly chosen report messages later just to control the updated state of the table.

Particularly, the method comprises a first context update step that is performed after the table update step. In the context update step, context information is updated with references of the current cell received in the report message. In this way, context information is maintained up-to-date for a future activation of the context information request step.

Advantageously, a first clock incremented time value is assigned to a first list of the table associated with the identifier of the previous cell and a second clock incremented time value is assigned to a second list of the table associated with the identifier of the current cell. The time values are set to zero when the identifiers of previous and current cells are memorised in the table. In that way the time values tell how old the memorisations of neighbour cells identifiers are. It is useful for appreciation of the up-to-date quality of the information stored in the table.

According to a first possibility, the report message that triggers the first context information request is a handover acknowledgement from a previous access network to a current access network so that the current cell identified by the report message is different per se from the previous cell identified by the context information.

According to a second possibility, the method comprises a compare step for determining if the current cell identified by the report message is different from the previous cell identified by the context information resulting from the first context information request step.

Use of the table is interesting for pushing a message by a second network to a mobile node connected to a first network.

Use of the table is also interesting for improving a handover process from a first network to a second network.

A second object of the invention is a system for providing neighbouring information relative to cells belonging to heterogeneous networks. The system comprises a register arranged for storing context information relating to a mobile node, a table arranged for memorising identifiers of neighbour cells belonging to the heterogeneous networks and a mobility manager arranged for receiving report messages from the mobile node that identify a current cell connected to the mobile node, for requesting the register to provide context information that identifies a previous cell registered to be connected to the mobile node before reception of said report message and for memorising an identifier of said previous cell and an identifier of said current cell in the table so as to indicate that said cells are neighbour cells when the current cell is different from the previous cell.

Particularly the mobility manager is arranged to update context information in the register with references of the current cell received in the report message.

Advantageously, the table comprises a first clock incremented time value assigned to a first list associated with the identifier of the previous cell and a second clock incremented time value assigned to a second list associated with the identifier of the current cell. The table is arranged for setting the time values to zero when the identifiers of previous and current cells are memorised in the table.

More particularly, the mobility manager is arranged to receive a report message that is a handover acknowledgement from a previous access network to a current access network so that the current cell identified by the report message is different per se from the previous cell identified by the context information.

More particularly also, the mobility manager is arranged for determining if the current cell identified by the report message is different from the previous cell identified by the context information provided by the register.

It is interesting to provide the system with an application server arranged to push a message to a mobile node according to information provided by the table.

A handover process from a first network to a second network can be improved when the mobility manager is arranged for requesting the table to provide information on neighbour cells.

Embodiments of the present invention will now be described by way of example only with reference to the accompanying drawings, where like parts are provided with corresponding reference numerals, and in which:
Figure 1 is a schematic representation of a telecommunication network according to an embodiment of the present invention;
Figure 2a shows steps implemented in a mobile node for performing of the method according to the invention;
Figure 2b shows steps implemented in a mobility manager for performing of the method according to the invention;
Figure 2c shows steps implemented in a register for performing of the method according to the invention;
Figure 2d shows steps implemented in a table for performing of the method according to the invention;
Figure 3 is an example of structure for a report message according to the invention;
Figure 4 is an example of structure for a table according to the invention
Figure 5 shows a repartition of cells in heterogeneous networks.

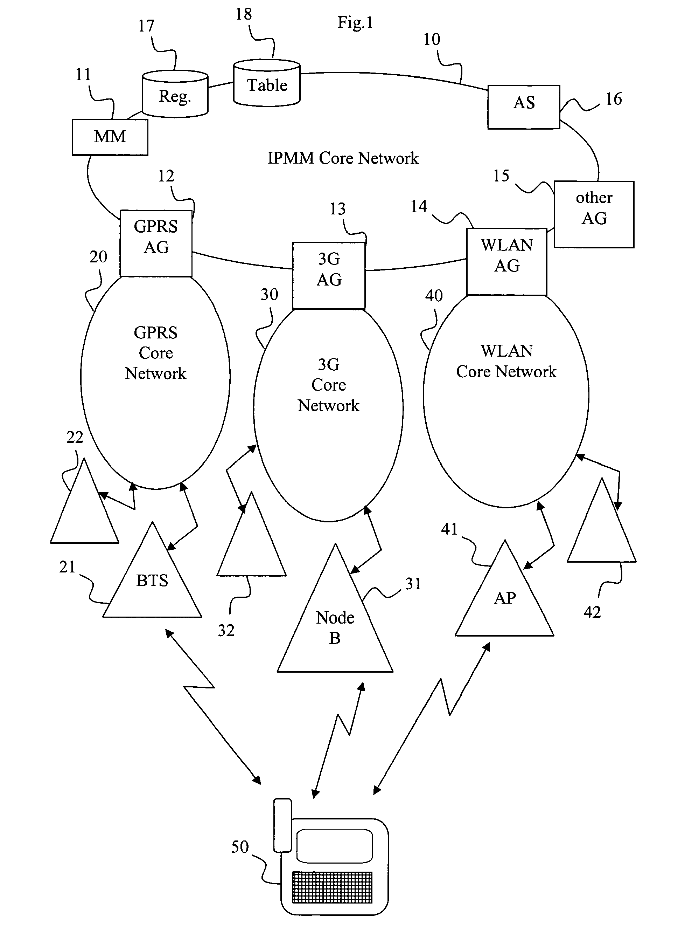

Figure 1 shows a general architecture for IP Mobility Management (IPMM) that aims at providing users with seamless mobility. An IPMM core network 10 comprises at least one mobility manager 11 (MM) and two or more access gateways (AG) located each between the IPMM core network and another core network wherewith a mobile node 50 is arranged to communicate.

For example, an access gateway 12 is located between the core network 10 and a core network 20 arranged to provide general packet radio service (GPRS). Currently, the gateway 12 is a gateway GPRS support node (GGSN). The core network 20 manages an access network comprising base transceiver stations (BTS) 21, 22 assigned to different cells, separately identified to distinguish them in the access network. On figure 1, radio coverage of BTS 21 allows the establishment of a down link from the core network 20 to the mobile node 50 and of an up link from the mobile node 50 to the core network 20.

For example again, an access gateway 14 is located between the core network 10 and a core network 40 that is a wireless local area network (WLAN). The core network 40 manages an access network comprising access points (AP) 41, 42 assigned to different cells, separately identified to distinguish them in the access network. On figure 1, radio coverage of AP 41 allows the establishment of a down link from the core network 40 to the mobile node 50 and of an up link from the mobile node 50 to the core network 40. Currently, the gateway 14 collects congestion information from the access points, processes said information and sends it to the mobility manager 11.

Other access gateways 15 can be located between the core network 10 and other core networks like for example an access gateway 13 being located between the core network 10 and a core network 30 arranged to provide third generation radio service (3G). In universal mobile telecommunication system (UMTS), the core network manages an access network comprising nodes B 31, 32 assigned to different cells, separately identified to distinguish them in the access network. On figure 1, radio coverage of Node B 31 allows the establishment of a down link from the core network 30 to the mobile node 50 and of an up link from the mobile node 50 to the core network 30.

The mobility manager 11 is arranged for updating of a register 17 and for being aware of current access network and future access network changes relating to mobile nodes that are registered in its domain. The mobility manager 11 comprises means for receiving report messages from mobile nodes which provide information about the Access network with which the mobile node is affiliated and also other access networks providing coverage within which the mobile node may communicate. The mobility manager uses information concerning the current affiliation of a mobile node and information received from the network to direct a handover of that mobile node to another network or another access node in the same network.

The IPMM core network comprises also an application server 16 (AS) that is arranged for interfacing with the IPMM mobility manager 11 with purpose of identifying a need for adaptation of applications running with the mobile node 50. The application server 16 is arranged to adapt an application according to quality of service (QoS) levels available on the access network currently used or usable for communication with the mobile node 50 in a context of the application.

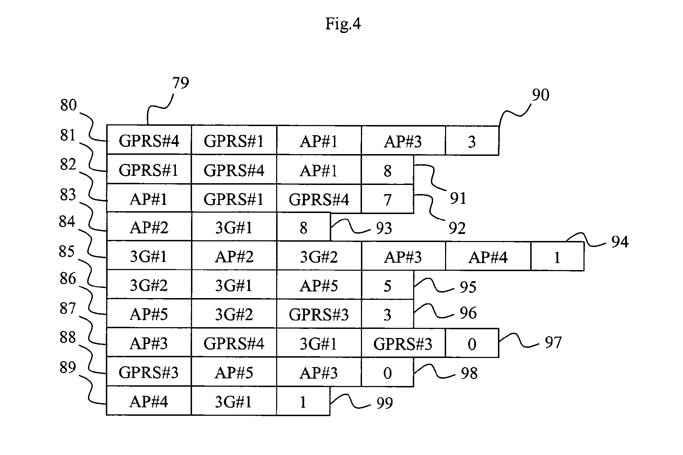

A table 18, also illustrated on figure 1, is more detailed in reference with figure 4. The register 17 and the table 18 are in the form of data bases connected with the mobility manager 11 by the core network 10 or simply collocated with the mobility manager 11 in a same physical equipment. The table 18 can be centralised in a same equipment for the complete IPMM core network 10 or can be distributed in different equipments, each being associated for example with a geographical zone.

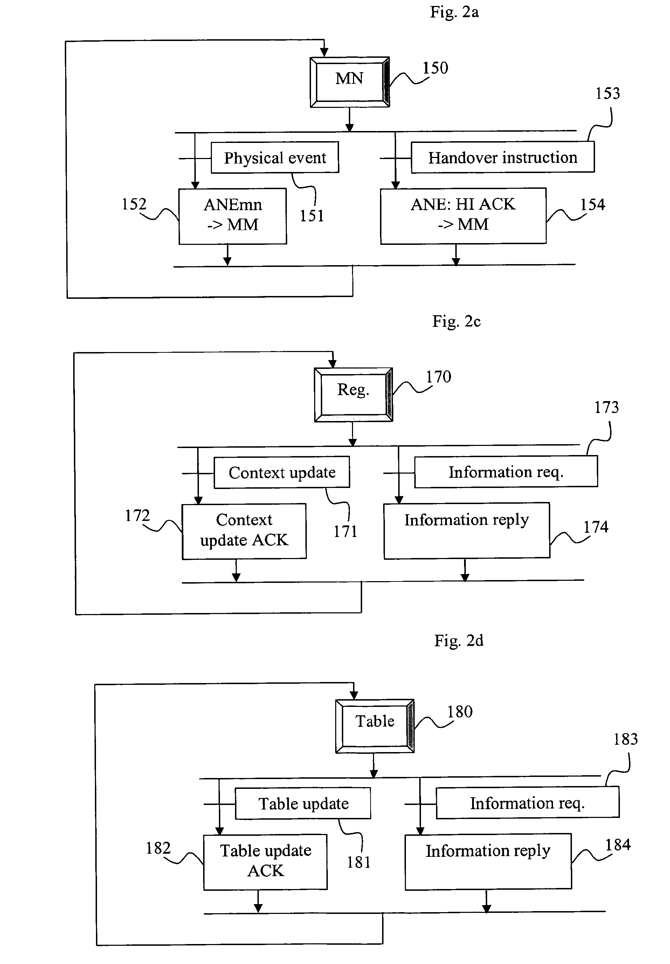

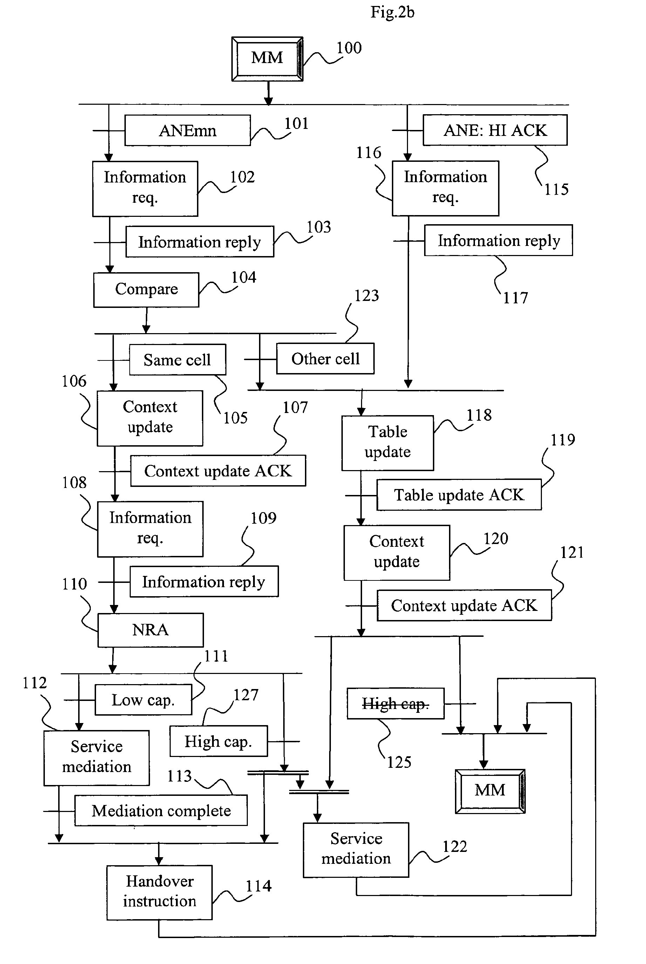

A method of functioning of the mobile node 50, of the mobility manager 11, of the register 17 and of the table 18, is now described with reference to respectively figure 2a, figure 2b, figure 2c and figure 2d.

From an initial state 150 of the mobile node 15, a validation of a transition 151 triggers a step 152 wherein a report message (ANEmn for Access Network Evaluation from the mobile node) is sent to the mobility manager by the mobile node through the current access network and the access gateway dedicated to said current access network that is the one currently used by the mobile node to be connected to the core network. The transition 151 is validated by detection of a physical event like for example a change of quality on the down link to the mobile node, a change of cell in the current access network or a periodical time for sending of the report message.

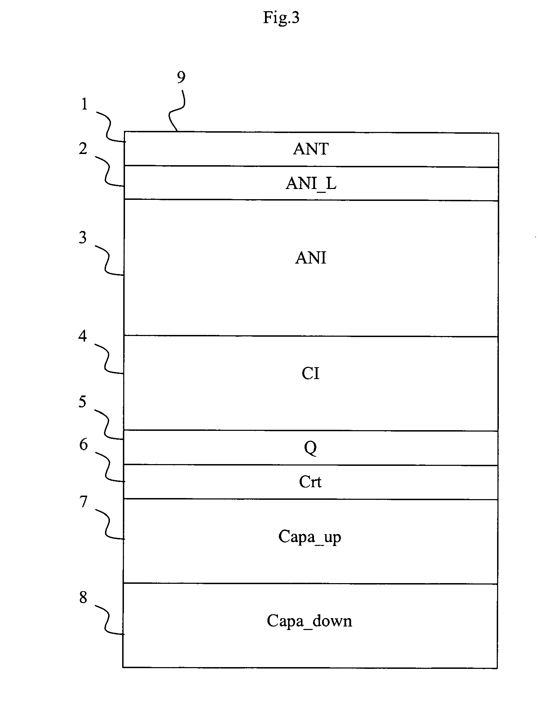

Figure 3 shows an example of payload structure for a report message 9 that is here an ANEmn, i.e. an access network evaluation message sent by the mobile node to the IPMM core network.

A field 1 of one byte (ANT) identifies the type of access network. For instance a value of 01 for a cellular network, 02 for an 802.11 network and so on. A field 2 of one byte (ANI_L) gives the length of a following field 3 in bytes. The field 3 of one to thirty two bytes (ANI) uniquely identifies the access network. The value is for example the one of the public land mobility network (PLMN) for general packet radio service (GPRS) or of the service set identifier (SSID) for wireless local area network (WLAN). A field 5 of one byte gives a current quality on the link between the mobile node and the access network. Two fields 7, 8 of four bytes each, are only present for cellular networks and give the capability of the mobile node respectively (Capa_up) in the uplink and (Capa_down) in the downlink.

More particularly, the message 9 comprises a field 4 of zero to six bytes to indicate a cell identifier (CI) in the access network. The length of the field is induced by the type of network indicated in field 3. On the WLAN, the cell identifier is the access point's MAC address. On the GPRS network, the cell identifier is the cell identity broadcasted by the base transceiver station (BTS) on the broadcast control channel (BCCH). The location area identification (LAI) may be added to the cell identity. On the 3G network, the cell identifier is the cell identity broadcasted by the node B on the broadcast channel (BCH). Other cell identifiers can be defined for other types of networks.

The message 9 comprises also a field 6 for a value (Crt) that indicates if the cell named by field 4 is the current cell.

Referring again to figure 2a, starting from the initial sate 150 of the mobile node 15, a validation of a transition 153 triggers a step 154 wherein a report message (ANE: HI ACK for Access Network Evaluation with context option set to Handover Instruction Acknowledgement) is sent to the mobility manager by the mobile node through the current access network and the access gateway dedicated to said current access network that is the one currently used by the mobile node to be connected to the core network. The transition 153 is validated by detection of a handover instruction received from the mobility manager. Before sending the report message, the mobile node connects itself to the access network targeted by the handover instruction.

Referring now to figure 2b, starting from an initial step 100 of the mobility manager 11, a step 106 of context update is generally activated after validation of a transition 101 wherein a report message ANEmn originated from step 152 is detected. In step 106, the mobility manager requests the register 17 to update values relating to the connexion between the mobile node 50 and the access network according to values received in the report message like for example the current quality given by field 5 and or the capability of the mobile node given by fields 7, 8.

As illustrated on figure 2c, a transition 171 is validated when the register 17 in an initial state 170, is requested to update the context. The transition 171 triggers a step 172 wherein the register updates the context and at the end of which, the register sends context update acknowledgement (ACK) message to the mobility manager.

A reception of the context update ACK message by the mobility manager after step 106 validates a transition 107 that has for effect to trigger a step 108. In step 108, the mobility manager requests contexts information from the register 17.

A reception of the contexts information request by the register 17 that is returned in initial sate 170 validates a transition 173 that has for effect to trigger a step 174. In step 174, the register 17 sends a contexts information reply to the mobility manager.

A reception of the contexts information reply by the mobility manager after step 108 validates a transition 109 that has for effect to trigger a step 110. In step 110, the mobility manager runs a network reselection algorithm (NRA) for deciding if another access network is more appropriate than the current access network according to the information received from the register.

When the NRA decides that another access network is more appropriate than the current access network, a step 114 is activated wherein the mobility manager sends a handover instruction to the mobile node and goes back to initial state 100 for waiting to a report message from the mobile node.

A reception of the handover instruction by the mobile node validates a transition 153 that has for effect to trigger a step 154 as shown on figure 2a. In step 154, the mobile node proceeds to a handover from the current access network to the more appropriate access network that is given with the handover instruction resulting from the NRA. In step 154, the mobile node sends also the report message (ANE: HI ACK) as previously described to the mobility manager. When the handover needs a redefmition of IP address because of the new access network, the mobile node sends a binding update (BU) to the mobility manager which sends back in such a case a binding acknowledgement (BACK) to the mobile node.

After reception of the ANE: HI ACK by the mobility manager, detected by a transition 115, the mobility manager activates a step 120 wherein a contexts update is sent to the register as in step 106 more precisely for the type of access network given by field 1, an identity of the access network given by field 3 because of a change resulting from the handover. The mobility manager returns in initial state 100 after reception of the contexts update ACK detected by transition 121.

Usually the handover decided by the NRA results from contexts information inducing a more appropriate access network with lower or higher capability. This change of capability needs a service mediation with a node corresponding in the session to the mobile node. Session notification and application adaptation functions are managed by the application server 16.

When the handover is toward an access network with lower capability as detected in a transition 111, a step 112 is triggered after step 110 in such a manner that step 114 is triggered after the mediation is detected complete in a transition 113, the mediation being executed during the activation of step 112.

When the handover is toward an access network with higher capability as detected in a transition 127, a step 122 is triggered after transition 115 so that step 114 is triggered before the mediation which in this case is activated in step 122 at the end of which the mobility manager returns in initial state 100. Return in initial state of the mobility manager is triggered by transition 121 when no higher capability is detected by transition a 125.

In that way, the service mediation activated in step 112 before the handover toward an access network with lower capability obviates a disruption of service. Indeed, the application is already prepared to a lower capability when the handover is executed. The service mediation activated in step 122 after the handover toward an access network with higher capability allows a seamless performance increase of the application already provided with higher capability of the access network.

The method is improved by steps 102 and 104 wherein the step 102 is triggered by the reception of an ANEmn detected in the transition 101. According to this improvement, the ANEmn comprises the more particular field 4 indicating a reference of cell. Steps 102 and 104 are performed for a report message ANEmn identifying a current cell connected to the mobile node. When the mobility manager receives other report messages not necessarily identifying a current cell, for example for purpose of measuring, the report message identifying a current cell is detected by its field 6 indicating that the cell is a current one connected to the mobile node. In step 102, the mobility manager requests contexts information from the register. The contexts information reply received from the register and detected in a transition 103, activates the compare step 104 wherein a first reference of access node corresponding to the cell identifier indicated by the field 4 of the report message received during transition 101 is compared with a second reference of access node given by information reply representative of the context of the session that is known before reception of the report message. The access node is one of the BTS 21, 22 when the mobile node 50 is connected to the core network 20, one of the Nodes B 31, 32 when the mobile node 50 is connected to the core network 30 or one of the access points 41, 42 when the mobile node 50 is connected to the core network 40.

A transition 105 is validated when the first and the second access nodes correspond to a same cell. The step 106 is only triggered by transition 105.

A transition 123 is validated when the first access node corresponds to another cell than the second access node. That means that the mobile node changed of cell before step 152 independently of a handover initiated by the mobility manager. It can be the case for a handover or a cell reselection is executed inside the access network or is forced between different access networks by a user of the mobile node 50. Instead of the step 106, the steps executed after validation of transition 123 are the steps that are executed after the validation of the transition 117. In that way, the context update executed by step 120 is also made for handovers that are not initiated by the IPMM core network.

Advantageously, before activation of step 120, a step 116 is triggered by transition 115 wherein the ANE: HI ACK comprises the particular field 4 indicating a cell identifier which is the one of the cell providing radio coverage in the access network targeted by the handover. For that purpose, when the mobile node connects itself to the targeted access network in step 154, the mobile node takes into consideration the identity of the cell attributed by the new connected access network. In step 120, the context is updated with the cell identifier.

In step 116, a contexts information request is sent to the register for particularly retrieving the identifiers of the access network and of the cell wherein the mobile node was connected before the handover. A transition 117 is validated by a reception of the information reply.

We consider that a cell identifier includes the cell identifier in the access network and the access network identifier. A step 118 is triggered by transition 117. In step 118, the previous cell identifier resulted from the information reply on a one side and the current cell identifier resulted from the handover instruction acknowledgement on another side, are representative of neighbour cells because of use for the handover. The previous and current identifiers are included in a table update request sent to the table 18. A preferred implementation of the step 118 takes into account that in some cases, a handover can be performed between two cells that are not really neighbour cells, in particular if one of the cells is on a moving support like a train or a plane. For purpose of discarding irrelevant information like the one provided by such handovers, before including the previous and current identifiers in the table update request, the identifiers are analysed to determine if a moving cell is involved. Statistical means can also be used to take into account that if very few handovers are performed between two cells, it can be suspected that these cells are not real neighbours. When the cells are detected not to be real neighbours, no table update request is sent to the table 18.

The table 18 has for example the structure now described with reference to figure 4. The table 18 comprises a first list 79 of first values comprising each the identifier of a cell to which the mobile node 50 or any other mobile node is or was connected at least once. Each first value is the head of a second list 80, 81... provided for included second values comprising each the identifier of a neighbour cell of the cell referenced in the head of the second list. In a preferred embodiment, each second list is terminated with a time value 90, 91... indicating how old was a last access to said second list. The table 18 is in the form of a data base provided with sequences of instructions for access to and updating of the lists.

With reference to figure 2d, when no sequence of instructions is executed, the database forming the table 18 is in an initial state 180 listening to receptions of messages. A transition 181 is validated by reception of the table update request that is sent by the mobility manager in step 118.

The transition 181 triggers a step 182 wherein the identifiers received by transition 181 are memorised in the first list 79 in the following manner. The first list 79 is scanned to determine if or not each of the previous and the current cell identifiers correspond to a first value already in the first list. When a correspondence exists between a value and a cell identifier, the cell identifier is memorised de facto. When no correspondence exists between a value and a cell identifier, the cell identifier is memorised by adding a corresponding value in the first list.

For the previous identifier being the head of a second list, the second list is scanned for memorising of the current identifier and in the preferred embodiment the time value at the end of said second list is set to zero for indicating that said second list is just updated. When a value corresponds to the current identifier, the current cell identifier is memorised de facto. When no value corresponds to the current identifier, a second value corresponding to the current identifier is added in said second list. For the current identifier being the head of another second list, the other second list is scanned for memorising of the previous identifier and in the preferred embodiment the time value at the end of said second list is set to zero for indicating that said second list is just updated. When a value corresponds to the current identifier, the previous cell identifier is memorised de facto. When no value corresponds to the previous identifiers, a second value corresponding to the previous identifier is added in said second list.

According to the preferred embodiment, the time value of each second list is scanned to determine if said time value is over a threshold. A time value being over the threshold means that no handover has been made for a long time to the cell corresponding to the head of the second list. In a second list with time value over the threshold, every second value corresponding to a neighbour cell of the cell referenced in the head of said second list is also a head of another second list. The value in the other second list that is the same as the one of the head of the second list with time value over the threshold is subtracted from the other second list. When all values equal to the one of the head of the second list with time value over the threshold are subtracted from all other second list with head value equal to one of the second list with time value over the threshold, the head of the second list with time value over the threshold is subtracted from the first list and said second list is eliminated.

In step 182, a table update acknowledgement (ACK) is sent to the mobility manager. A transition 119 is validated by reception of the table update ACK. On figure 2b, the transition 119 triggers the step 120. The order of activation of steps 118 and 120 is without consequences. Steps 118 and 120 can also be executed in parallel in which case step 122 or return to initial state are triggered when transitions 119 and 121 are both validated.

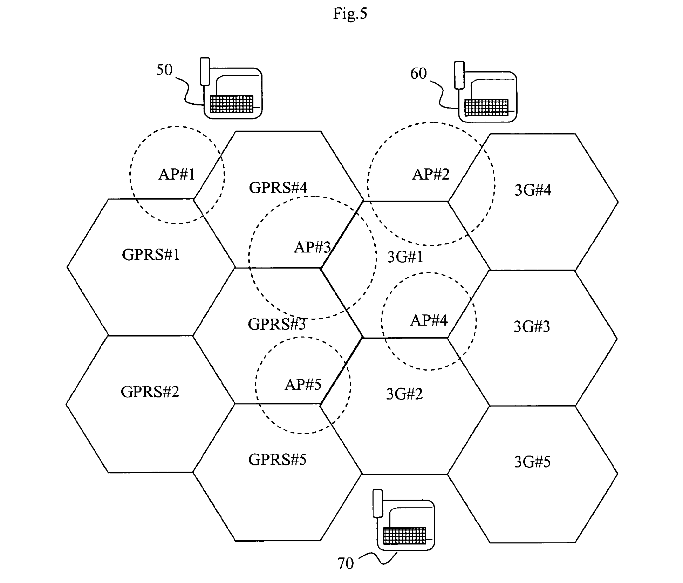

Figure 5 represents radio coverage of geographical zones by cells of different heterogeneous networks. For example cells illustrated by hexagons GPRS#1, GPRS#2, GPRS#3, GPRS#4, GPRS#5 belongs to an access network linked with the GPRS core network 20, cells illustrated by hexagons 3G#1, 3G#2, 3G#3, 3G#4, 3G#5 belongs to an access network linked with the 3G core network 30, cells illustrated by circles AP#1, AP#2, AP#3, AP#4, AP#5 belongs to an access network linked with the WLAN core network 40.

An advantage of the centralized table 18 is to provide lists of neighbour cells independently of the networks and of mobile nodes using these networks.

Assuming any mobile node like the mobile node 50 moving from the cell GPRS#4 to the cell GPRS#1 by a common handover inside the GPRS access network, the mobile node is detecting the change of cell in transition 151 and sends an ANEmn in step 152 with reference of cell GPRS#1 of the new cell. An information reply detected in transition 103 gives the reference of cell GPRS#4 of the previous cell. The compare step 104 detecting a new cell validates the transition 123. In step 118, a second list 80 is opened in table 18 with the reference of cell GPRS#4 in the first list 79 and a second list 81 is opened with the reference of cell GPRS#1 in the first list 79. The reference of cell GPRS#1 is added in the second list 80 as neighbour of the cell GPRS#4. The reference of cell GPRS#4 is added in the second list 81 as neighbour of the cell GPRS#1. Queues 90 and 91 of the second lists 80 and 81 are set with a zero time value.

Assuming another mobile node like a mobile node 60 connected to the access point 42 of the cell AP#2, is detecting by transition 151 a loss of quality on the down link from the WLAN core network 40. The mobile node 60 sends in step 152 an ANEmn to the mobility manager 11 with field 5 set to the current quality through access point 42, core network 40, access gateway 14 and IPMM core network 10. In step 110 activated by transitions and steps 101 to 109, the network reselection algorithm decides to trigger a handover to a radio cellular networks. The mobility manager 11 sends in step 114, a handover instruction to the mobile node 60 through the IPMM core network, the access gateway 14, the core network 40 and the access point 42. Detecting a reception of the handover instruction by transition 153, the mobile node 60 tries to connect to a radio cellular network like 3G or GPRS.

Assume that in the mean time, the user of the mobile node 50 is connecting himself to the WLAN core network by access point 41 of the cell AP#1. In step 152, the mobile node 50 sends an ANEmn to the mobility manager 11 with the reference of the new cell in field 4. In step 118, the reference of cell AP#1 is added in the second list 81 as neighbour of the cell GPRS#1. A second list 82 is opened with the reference of cell AP#1 in the first list 79 and the reference of cell GPRS#1 is added in the second list 81 as neighbour of the cell AP#1. Queues 91 and 92 of the second lists 81 and 82 are set with a zero time value. The queue 90 has been incremented by a clock of the table 18.

Executing the handover in step 154, assume that the mobile node 70 has detected to be under coverage of cell 3G#1 and has successfully been connected to the node B 31 of that cell. At the end of step 154, the mobile node 70 sends a report message ANE:HI ACK to the mobility manager 11 through the access gateway 13. Detecting the report message by transition 115, the mobility manager 11 asks for a table update in step 118. When the table 18 detects the table update request by transition 181, a second list 83 is opened with the reference of cell AP#2 in the first list 79 and a second list 84 is opened with the reference of cell 3G#1 in the first list 79. The reference of cell 3G#1 is added in the second list 83 as neighbour of the cell AP#2. The reference of cell AP#2 is added in the second list 84 as neighbour of the cell 3G#1. Queues 93 and 94 of the second lists 83 and 84 are set with a zero time value. The queues 90, 91 and 92 have been incremented by a clock of the table 18.

Assume that the mobile node 50 is moving successively from cell AP#1 to cell GPRS#4, from cell GPRS#4 to cell AP#3, from cell AP#3 to cell 3G#1, from cell 3G#1 to cell AP#4 and that the mobile node 60 is moving successively from cell 3G#1 to cell 3G#2, from cell 3G#2 to cell AP#5, from cell AP#5 to cell GPRS#3, from cell GPRS#3 to cell AP#3. In step 182, the reference of cell AP#1 is added to the second list 80 and the reference of cell GPRS#4 is added to the second list 81, the reference of cell 3G#2 is added to the second list 84 and the reference of cell 3G#1 is added to a second list 85 with reference of cell 3G#2 in the first list 79, the reference of cell AP#5 is added to the second list 85 and the reference of cell 3G#2 is added to a second list 86 opened with reference of cell AP#5 in the first list 79, the reference of cell AP#3 is added to the second list 80 and the reference of cell GPRS#4 is added to a second list 87 opened with reference of cell AP#3 in the first list 79, the reference of cell AP#3 is added to the second list 84 and the reference of cell 3G#1 is added to the second list 87, the reference of cell GPRS#3 is added to the second list 86 and the reference of cell AP#5 is added to a second list 88 opened with reference of cell GPRS#3 in the first list 79, the reference of cell AP#4 is added to the second list 84 and the reference of cell 3G#1 is added to a second list 89 opened with reference of cell AP#4 in the first list 79, the reference of cell AP#3 is added to the second list 88 and the reference of cell GPRS#3 is added to the second list 87. Assuming that the last detected handover is from cell GPRS#3 to cell AP#3, the queues 97 and 98 of the second lists 87 and 88 are the last ones to be set to zero while the queues 91, 93, 92, 95, 96, 90, 94, 99 of respectively the second lists 81, 83, 82, 85, 86, 80, 84, 89 have been incremented by the clock of the table 18.

The table 18 of neighbouring cells is useful for different applications like push services or P2P services. These applications can be available for a dedicated user, a dedicated cell or a list of users.

For example the knowledge of the neighbouring cells around a dedicated cell can be used for an advertising service, based on a push service. Let us take the example of a shop that wants to advertise the bargain of the day to the possible customers in the area. Referring to figure 5, for a shop being under the coverage of a WLAN, a first application allows the shop to send its advertisement and its WLAN cell identifier AP#3 to the application server 16. The application server looks up in the neighbour table 18 and retrieves the list of neighbouring cells GPRS#3, GPRS#4 and 3G#1 around the WLAN cell AP#3 of the shop. Then there are several possibilities to contact the possible customers. According to a first possibility, the application server 16 can trigger a push on each network (WLAN, GPRS,...) in the cells of the area. According to a second possibility, the application server can retrieve the IP addresses of the people located in these cells from the IPMM and contact them with a multicast message, only IPPMM clients will be contacted then. Note that even if the GSM customers are not managed by IPMM in its current definition, they can be contacted as well because the topology of the GSM cells is obtained from the GPRS topology. They can be sent an SMS for example.

According to another application of this invention, the information contained in the table 18 can be used for the purpose of handovers as an enrichment of the already available information. For example, let us consider the case where an operator only covers an area with one access network, typically GPRS. To improve its coverage, the operator wants to allow its customers to use the access network of a local provider as well and consequently chooses to contract an agreement with a WLAN provider that owns a hotspot covering the area. Thanks to the invention, the operator can obtain very easily the knowledge of the local provider network topology and use it to manage the handovers of its customers. The first few mobile nodes reaching the area will discover the WLAN coverage. The mobility manager will make some of them perform handovers to the WLAN without having any further knowledge of the topology of the hotspots and thus discover the topology of the area thanks to the report sent by the mobile nodes. The reason is that these reports will include information about the access points of the hotspot and this information can be stored so that the precise topology of the area is discovered.

The network reselection algorithm NRA executed in step 110 can also be improved. Usually, when the mobility manager send a handover instruction to the mobile node in step 114, this handover instruction addresses a particularly access network. The mobile node connects itself to the addressed access network in step 154. The access node results from the connection process of the mobile node to the access network without being necessarily explicitly specified by the mobility manager. A predictive algorithm PA preceding the NRA can consult the table 18 to induce which other access networks are available for a mobile node connected to a previous access network by a previous identified cell. For example, consider a mobile node 70 on figure 5 connected to the WLAN access network 40 by access node of the cell AP#5. When the mobility manager 11 performs step 110 after having received in transition 101, a report message indicating the cell AP#5 as the current cell, the PA can induce from the list 86 of table 18 that the 3G access network is available at least with cell 3G#2 and the GPRS access network is available at least with cell GPRS#3. Consequently the NRA will have a choice between the 3G and the GPRS networks. The mobility management of the mobile node can be improved because the algorithm PA can predict from the table 18 a more probable access node to which the mobile node will connect in step 154. Therefore in step 110, the PA sends an information request indicating the current access node to the table 18. When detecting the information request by transition 183, the table 18 performs a step 184 wherein the list of neighbour cells of the indicated cell is returned in an information reply to the PA. The PA sends the mobile node a request to perform a quality measurement of links with each available access network. When for each available access network 3G, GPRS, the mobility manager receives a report message with quality in field 5, the NRA can decide for the access network with the most appropriate access node.

## Claims

1. A method for providing neighbouring information relative to cells belonging to heterogeneous networks comprising:
- a first context information request step (102,116) triggered by a reception of a report message from a mobile node, said report message identifying a current cell connected to the mobile node, wherein context information identifies a previous cell registered to be connected to the mobile node before reception of said report message;
- a table update step (118) performed when the current cell is different from the previous cell, wherein an identifier of said previous cell and an identifier of said current cell are memorised in a table (18) for indicating that said cells are neighbour cells.

2. A method as claimed in Claim 1 comprising:
- a first context update step (120) performed after the table update step (118), wherein context information is updated with references of the current cell received in the report message.

3. A method as claimed in Claim 1 or 2 wherein a first clock incremented time value (98) assigned to a first list (88) of the table (18) associated with the identifier of the previous cell and a second clock incremented time value (97) assigned to a second list (87) of the table (18) associated with the identifier of the current cell are set to zero when a table update request comprising the identifiers of previous and current cells is sent to the table (18).

4. A method as claimed in any preceding Claim wherein:
- the report message that triggers the first context information request (116) is a handover acknowledgement from a previous access network to a current access network so that the current cell identified by the report message is different per se from the previous cell identified by the context information.

5. A method as claimed in Claim 1, 2 or 3 comprising:
- a compare step (104) for determining if the current cell identified by the report message is different from the previous cell identified by the context information resulting from the first context information request step (102).

6. A method as claimed in any preceding Claim wherein the table (18) is used to push a message by a second network to a mobile node connected to a first network.

7. A method as claimed in any preceding Claim wherein the table (18) is used to improve a handover process from a first network to a second network.

8. A system for providing neighbouring information relative to cells belonging to heterogeneous networks comprising:
- a register (17) arranged for storing context information relating to a mobile node (50);
- a table (18) arranged for memorising identifiers of neighbour cells belonging to the heterogeneous networks;
- a mobility manager (11) arranged for receiving report messages from the mobile node that identify a current cell connected to the mobile node, for requesting the register to provide context information that identifies a previous cell registered to be connected to the mobile node before reception of said report message and for memorising an identifier of said previous cell and an identifier of said current cell in the table (18) so as to indicate that said cells are neighbour cells when the current cell is different from the previous cell.

9. A system as claimed in Claim 8 wherein the mobility manager (11) is arranged to update context information in the register (17) with references of the current cell received in the report message.

10. A system as claimed in Claim 8 or 9 wherein the table (18) comprises a first clock incremented time value (98) assigned to a first list (88) associated with the identifier of the previous cell and a second clock incremented time value (97) assigned to a second list (87) associated with the identifier of the current cell, the table (18) being arranged for setting the time values to zero when the identifiers of previous and current cells are memorised in the table (18).

11. A system as claimed in Claim 8, 9 or 10 wherein:
- the mobility manager (11) is arranged to receive a report message that is a handover acknowledgement from a previous access network to a current access network so that the current cell identified by the report message is different per se from the previous cell identified by the context information.

12. A system a claimed in Claim 8, 9 or 10 wherein:
- the mobility manager (11) is arranged for determining if the current cell identified by the report message is different from the previous cell identified by the context information provided by the register (17).

13. A system as claimed in anyone of Claims 8 to 12 comprising an application server (16) arranged to push a message to a mobile node according to information provided by the table (18).

14. A system as claimed in anyone of Claims 8 to 13 wherein the mobility manager (11) is arranged for requesting the table (18) to provide information with purpose of improving a handover process from a first network to a second network.
